# EUROPÄISCHE PATENTANMELDUNG

(11) **EP 2 653 272 A1**
(43) Veröffentlichungstag der Anmeldung: **23.10.2013**
(21) Anmeldenummer: 12164367.0
(22) Anmeldetag: 17.04.2012
(51) Int. Cl.: B25J 9/16

(54) **Betriebsverfahren für einen Rechner zum Programmieren der Bewegungen einer Maschine**

(71) Anmelder: Siemens Aktiengesellschaft, 80333 München (DE)
(72) Erfinder: Donat, Albrecht, 91462 Dachsbach (DE)

(57) **Zusammenfassung**

Einem Rechner (1) ist bekannt, welches einem Zustand einer Maschine (6), die mindestens ein motorisch verfahrbares Element (8) aufweist, entsprechende dreidimensionale Bild (B) der Maschine (6) über eine Anzeigeeinrichtung (5) an einen Bediener (7) der Maschine (6) ausgegeben wird. Dem Rechner (1) werden mittels einer Erfassungseinrichtung (9) erfasste Greifbewegungen, Loslassbewegungen und Lageveränderungen einer Hand (10) des Bedieners (7) zugeführt. Die Greifbewegungen, die Loslassbewegungen und die Lageveränderungen der Hand (10) des Bedieners (7) werden von dem Rechner (1) bezüglich des dreidimensionalen Bildes (B) der Maschine (6) registriert. In dem Fall, dass der Bediener (7) mit seiner Hand (10) in Bezug auf das dreidimensionale Bild (B) das motorisch verfahrbare Element (8) greift und sodann die Lage seiner Hand (10) verändert, werden von dem Rechner (1) Maßnahmen ergriffen, aufgrund derer der Zustand der Maschine (6) entsprechend der Lageveränderung der Hand (10) des Bedieners (7) nachgeführt wird, bis der Bediener (7) in Bezug auf das dreidimensionale Bild (B) das motorisch verfahrbare Element (8) loslässt.

## Beschreibung

Die vorliegende Erfindung betrifft ein Betriebsverfahren für einen Rechner.

Die vorliegende Erfindung betrifft weiterhin ein Computerprogramm, das Maschinencode umfasst, der von einem Rechner unmittelbar abarbeitbar ist und dessen Abarbeitung durch den Rechner bewirkt, dass der Rechner ein derartiges Betriebsverfahren ausführt.

Insbesondere betrifft die vorliegende Erfindung das Gebiet von Maschinensteuerungen und insbesondere das sogenannte Teach-in.

Im Stand der Technik werden Maschinen in der Regel über Handbediengeräte oder fest installierte Bediengeräte verfahren, um im Teach-Betrieb die Maschinenachsen entlang vorgegebener oder empirisch ermittelter Bahnkurven zu verfahren. Eine andere Möglichkeit, Maschinen (oder auch Roboter) im Teach-Betrieb entlang von Bahnkurven zu verfahren, besteht darin, das Teaching mit reduzierter Maschinenleistung vorzunehmen (sogenannter Einrichtbetrieb). Bei der Maschinenbedienung kommen im Stand der Technik zweidimensionale Anzeigeeinheiten zum Einsatz, die den Zustand der Maschine in Koordinaten oder ähnlichen Anzeigeformen darstellen. Das Verfahren erfolgt durch den Bediener im Jog-Betrieb, bei dem einzelne Achsen durch Tastenbedienung bewegt werden.

Im Stand der Technik sind weiterhin Anzeigetechnologien bekannt, welche dreidimensionale Darstellungen ermöglichen. Dies sind zum einen Anzeigetechniken, welche zusätzliche Hilfsmittel wie beispielsweise Shutterbrillen benötigen. Weiterhin sind sogenannte autostereoskopische Displays bekannt. Im Stand der Technik sind weiterhin bewegungserkennende Bediensensoren bekannt, die beispielsweise über Bilderfassung und/oder Bewegungserkennung von Bediensensorik Bedienhandlungen im dreidimensionalen Raum erkennen können.

Die Aufgabe der vorliegenden Erfindung besteht darin, Möglichkeiten zu schaffen, mittels derer auf einfache und komfortable Weise - insbesondere auf für einen Bediener intuitive Weise - einem Einrichtbetrieb einer Maschine (mit oder ohne Teach-in) realisierbar sind.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 7.

Erfindungsgemäß ist vorgesehen, ein Betriebsverfahren für einen Rechner zu schaffen, bei welchem
- dem Rechner bekannt ist, welches einem Zustand einer Maschine, die mindestens ein motorisch verfahrbares Element aufweist, entsprechende dreidimensionale Bild der Maschine über eine Anzeigeeinrichtung an einen Bediener der Maschine ausgegeben wird,
- dem Rechner mittels einer Erfassungseinrichtung erfasste Greifbewegungen, Loslassbewegungen und Lageveränderungen einer Hand des Bedieners zugeführt werden,
- die Greifbewegungen, die Loslassbewegungen und die Lageveränderungen der Hand des Bedieners von dem Rechner bezüglich des dreidimensionalen Bildes der Maschine registriert werden,
- wobei in dem Fall, dass der Bediener mit seiner Hand in Bezug auf das dreidimensionale Bild das motorisch verfahrbare Element greift und sodann die Lage seiner Hand verändert, von dem Rechner Maßnahmen ergriffen werden, aufgrund derer der Zustand der Maschine entsprechend der Lageveränderung der Hand des Bedieners nachgeführt wird, bis der Bediener in Bezug auf das dreidimensionale Bild das motorisch verfahrbare Element loslässt.

Der Bediener kann also in einer sogenannten Virtual-Reality-Umgebung das motorisch verfahrbare Element virtuell greifen und bewegen.

Es ist möglich, dass die von dem Rechner ergriffenen Maßnahmen zum Nachführen des Zustands der Maschine das Ausgeben von Steuerbefehlen an die Maschine umfassen und dass dem Rechner den Zustand der Maschine beschreibende Daten zugeführt werden. Es ist also möglich, die reale Maschine entsprechend zu steuern und dem Rechner den entsprechenden Zustand der realen Maschine zuzuführen.

Es ist möglich, dass die den Zustand der Maschine beschreibenden Daten mittels mindestens einer Kamera erfasste Bilddaten der Maschine umfassen. In diesem Fall kann es unter Umständen ausreichen, wenn der Rechner die entsprechenden Bilddaten auswertet. Beispielsweise kann in an sich bekannter Weise ein Muster - beispielsweise ein Streifenmuster - auf die Maschine projiziert werden und können Verschiebungen und Verzerrungen des Streifenmusters ausgewertet werden.

Alternativ oder zusätzlich können die den Zustand der Maschine beschreibenden Daten von Lagesensoren der Maschine ausgegebene Lagesignale umfassen. In diesem Fall kann das dem Zustand der Maschine entsprechende dreidimensionale Bild der Maschine von dem Rechner anhand der Lagesignale generiert werden.

Auch Mischformen sind möglich. Beispielsweise kann der Rechner in dem Fall, dass ihm nur die Lagesignale zugeführt werden, die dreidimensionale Rekonstruktion intern vornehmen. Um die Registrierung ordnungsgemäß vornehmen zu können, muss dem Rechner in diesem Fall jedoch bekannt sein, mit welchen Abbildungsparametern das dreidimensionale Bild der Maschine an den Bediener ausgegeben wird.

Alternativ zu einer Ansteuerung einer realen Maschine ist es möglich, dass der Rechner ein Modell der Maschine implementiert, dass die von dem Rechner ergriffenen Maßnahmen zum Nachführen des Zustands der Maschine das Aktualisieren des Modells umfassen und dass das dem Zustand der Maschine entsprechende dreidimensionale Bild der Maschine von dem Rechner anhand des Modells generiert wird. Je nach Ausgestaltung des Modells kann der Rechner auch in diesem Fall die Steuerbefehle für die Maschine generieren und dem Modell zuführen. Alternativ ist es möglich, das Modell anderweitig zu realisieren.

In den Fällen, in denen das dem Zustand der Maschine entsprechende dreidimensionale Bild der Maschine von dem Rechner generiert wird, ist vorzugsweise vorgesehen, dass der Rechner von dem Bediener der Maschine mindestens einen Abbildungsparameter entgegen nimmt und dass der Rechner das von ihm zu generierende dreidimensionale Bild der Maschine entsprechend dem Abbildungsparameter generiert. Beispiele von Abbildungsparametern sind ein Skalierungsfaktor, der Ort und die Orientierung des dreidimensionalen Bildes im Raum.

Vorzugsweise ist vorgesehen, dass der Rechner mit dem Nachführen des Zustands der Maschine korrespondierende Steuerbefehle generiert und in einem Speicher hinterlegt, so dass die Maschine wiederholt entsprechend den in dem Speicher hinterlegten Steuerbefehlen ansteuerbar ist. Auf diese Weise ist ein komfortables Teach-in realisierbar.

Die erfindungsgemäße Aufgabe wird weiterhin durch ein Computerprogramm der eingangs genannten Art gelöst. Das Computerprogramm ist in diesem Fall derart ausgestaltet, dass die Abarbeitung des Computerprogramms durch den Rechner bewirkt, dass der Rechner ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1 und 2: je eine mögliche Ausgestaltung einer Rechneranordnung und
- FIG 3 bis 6: Ablaufdiagramme.

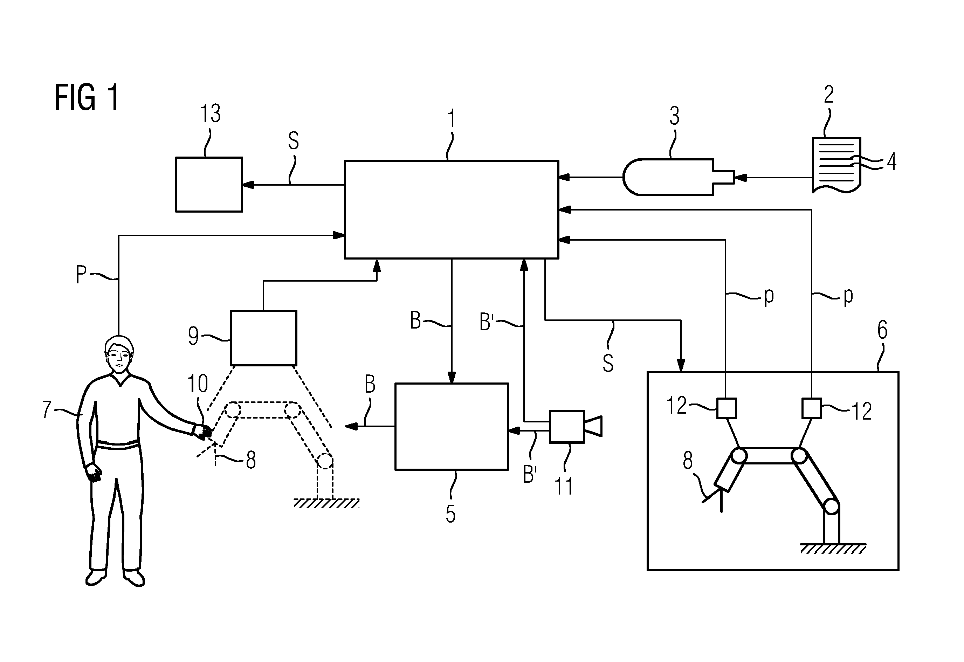

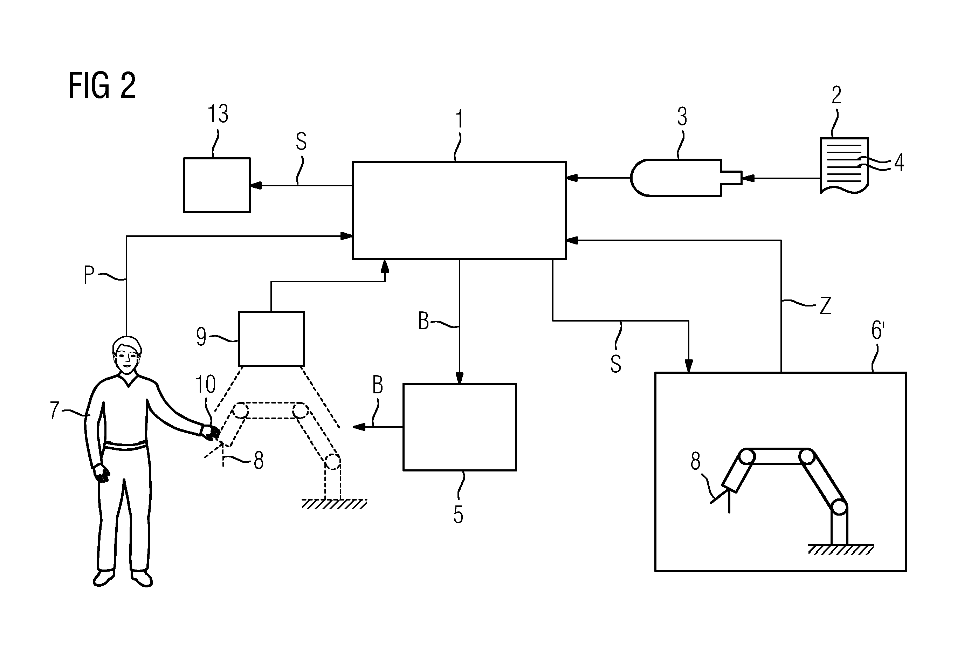

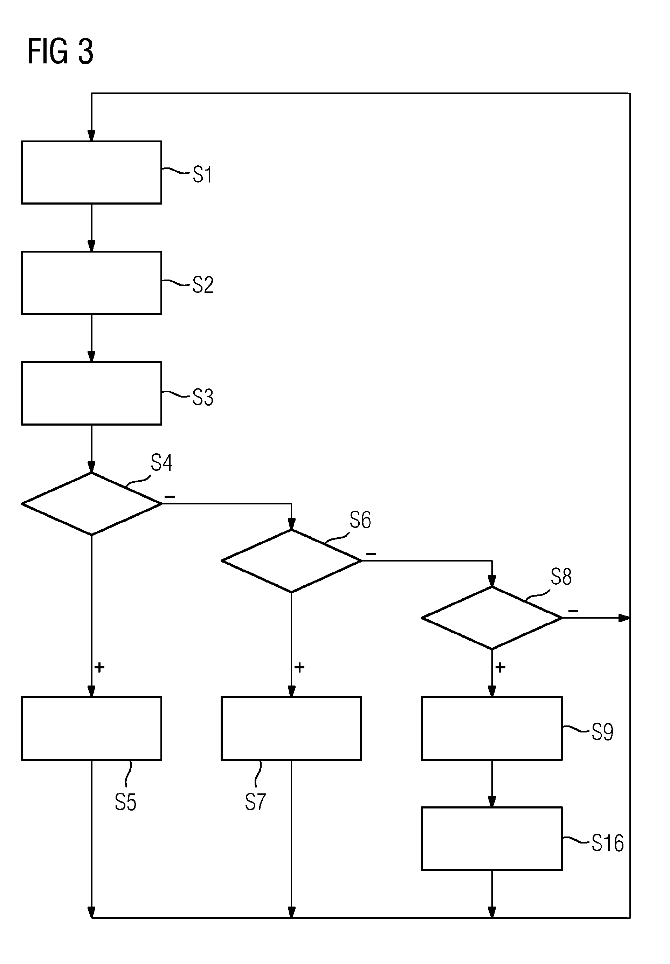

Gemäß den FIG 1 und 2 ist ein Rechner 1 mit einem Computerprogramm 2 programmiert. Das Computerprogramm 2 kann dem Rechner 1 beispielsweise über einen mobilen Datenträger 3, auf dem das Computerprogramm 2 in (ausschließlich) maschinenlesbarer Form - beispielsweise in elektronischer Form - gespeichert ist, zugeführt worden sein. Das Computerprogramm 2 umfasst Maschinencode 4, der von dem Rechner 1 unmittelbar abarbeitbar ist. Die Abarbeitung des Maschinencodes 4 durch den Rechner 1 bewirkt, dass der Rechner 1 ein Betriebsverfahren ausführt, das nachfolgend in Verbindung mit FIG 3 näher erläutert wird.

Im Rahmen des erfindungsgemäßen Betriebsverfahrens wird über eine Anzeigeeinrichtung 5 ein dreidimensionales Bild B einer Maschine 6 an einen Bediener 7 der Maschine 6 ausgegeben. Die Maschine 6 weist mindestens ein motorisch verfahrbares Element 8 auf. Das Bild B entspricht einem bestimmten Zustand der Maschine 6, insbesondere einer bestimmten Position des verfahrbaren Elements 8.

Zum Anzeigen des dreidimensionalen Bildes B geeignete Anzeigeeinrichtungen 5 sind dem Fachmann bekannt. Rein beispielhaft wird auf sogenannte autostereoskopische Displays verwiesen.

Es ist möglich, dass der Rechner 1 selbst das ausgegebene Bild B generiert. Alternativ ist es möglich, dass das Bild B nicht von dem Rechner 1 generiert wird. Unabhängig davon, ob die eine oder die andere Vorgehensweise ergriffen wird, wird dem Rechner 1 in einem Schritt S1 bekannt, welches Bild B an den Bediener 7 ausgegeben wird.

Im Rahmen des erfindungsgemäßen Betriebsverfahrens wird weiterhin mittels einer geeigneten Erfassungseinrichtung 9 erfasst, welche Bewegung der Bediener 7 mit seiner Hand 10 ausführt. Die Erfassung erfolgt im dreidimensionalen Raum. Geeignete Erfassungseinrichtungen 9 sind dem Fachmann bekannt. Rein beispielhaft wird auf Bedienhandschuhe mit integrierten Raumsensoren und auf Bewegungsaufnehmer, wie sie für WII-Spielekonsolen bekannt sind, verwiesen.

Die mittels der Erfassungseinrichtung 9 erfasste Bewegung der Hand 10 wird dem Rechner 1 zugeführt. Der Rechner 1 nimmt die entsprechende Bewegung in einem Schritt S2 entgegen. Die Bewegung der Hand 10 des Bedieners 7 kann alternativ eine Greifbewegung, eine Loslassbewegung oder eine Lageveränderung sein. Die Lageveränderung kann translatorisch und/oder rotatorisch sein.

In einem Schritt S3 registriert der Rechner 1 die erfasste Bewegung der Hand 10 bezüglich des an den Bediener 7 ausgegebenen Bildes B der Maschine 6. Entsprechende Registrierverfahren sind dem Fachmann geläufig.

In einem Schritt S4 prüft der Rechner 1, ob die im Schritt S2 entgegen genommene Bewegung der Hand 10 eine Greifbewegung ist, mittels derer der Bediener 7 mit seiner Hand 10 in Bezug auf das dreidimensionale Bild B das motorisch verfahrbare Element 8 greift. Genauer ausgedrückt: Der Rechner 1 prüft im Schritt S4, ob die Hand 10 des Bedieners 7 im dreidimensionalen Raum denjenigen Bereich umgreift, in den die Darstellung des motorisch verfahrbaren Elements 8 entsprechend dem dreidimensionalen Bild B abgebildet wird, und an dieser Position zugreift.

Wenn die Prüfung des Schrittes S4 zu einem positiven Ergebnis führt, setzt der Rechner 1 in einem Schritt S5 eine logische Variable OK auf den Wert WAHR. Anderenfalls geht der Rechner 1 zu einem Schritt S6 über.

Im Schritt S6 prüft der Rechner 1, ob die im Schritt S2 entgegen genommene Bewegung der Hand 10 eine Loslassbewegung ist, mittels derer der Bediener 7 mit seiner Hand 10 in Bezug auf das dreidimensionale Bild B das motorisch verfahrbare Element 8 loslässt. Genauer ausgedrückt: Der Rechner 1 prüft im Schritt S6, ob die Hand 10 des Bedieners 7 im dreidimensionalen Raum denjenigen Bereich umgreift, in den die Darstellung des motorisch verfahrbaren Elements 8 entsprechend dem dreidimensionalen Bild B abgebildet wird, und an dieser Position eine Loslassbewegung ausführt.

Wenn die Prüfung des Schrittes S6 zu einem positiven Ergebnis führt, setzt der Rechner 1 in einem Schritt S7 die logische Variable OK auf den Wert FALSCH. Anderenfalls geht der Rechner 1 zu einem Schritt S8 über.

Aus den obigen Ausführungen ist ersichtlich, dass die logische Variable OK die Bedeutung hat, ob der Bediener 7 das motorisch verfahrbare Element 8 virtuell gegriffen hat oder nicht.

Im Schritt S8 prüft der Rechner 1, ob die logische Variable OK den Wert WAHR aufweist. Wenn dies der Fall ist, ergreift der Rechner 1 in einem Schritt S9 Maßnahmen, aufgrund derer der Zustand der Maschine 6 entsprechend der Lageänderung der Hand 10 des Bedieners 7 nachgeführt wird. Anderenfalls wird der Schritt S9 übersprungen.

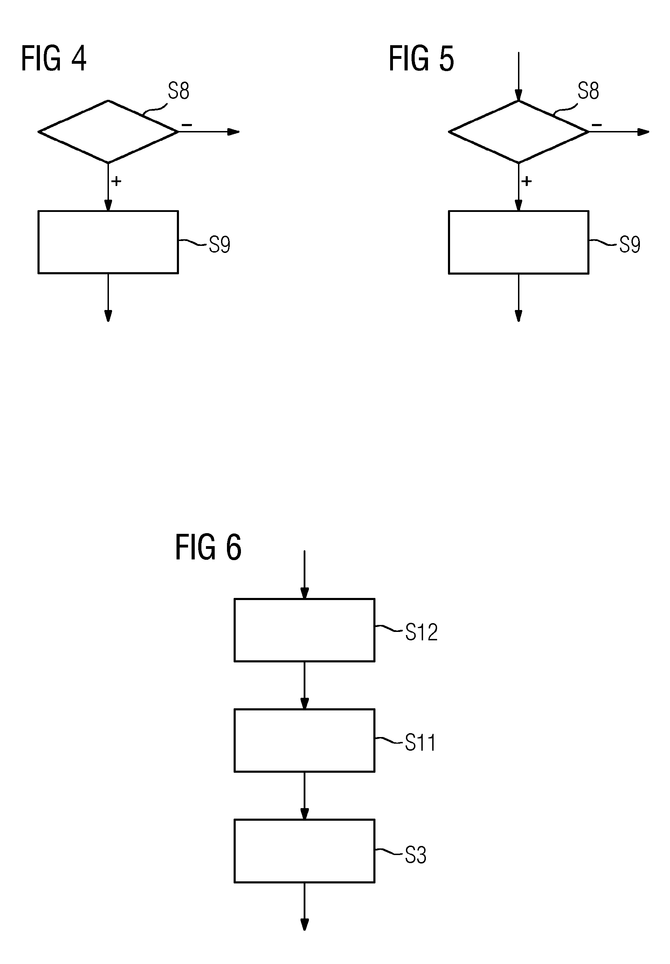

Es ist entsprechend der Darstellung von FIG 1 möglich, dass der Rechner 1 auf eine real vorhandene Maschine 6 einwirkt. In diesem Fall umfassen die von dem Rechner 1 im Rahmen des Schrittes S9 ergriffenen Maßnahmen gemäß FIG 4 das Generieren von Steuerbefehlen S, welche ein Verfahren des motorisch verfahrbaren Elements 8 entsprechend der Lageänderung der Hand 10 des Bedieners 7 bewirken. Die Steuerbefehle S korrespondieren also mit der Lageänderung der Hand 10 des Bedieners 7. Die generierten Steuerbefehle S werden - ebenfalls im Rahmen des Schrittes S9 - an die Maschine 6 ausgegeben.

In dem Fall, dass der Rechner 1 auf eine real vorhandene Maschine 6 wirkt, werden dem Rechner 1 weiterhin Daten zugeführt, welche den Zustand der (realen) Maschine 6 beschreiben. Beispielsweise kann gemäß FIG 1 (mindestens) eine Kamera 11 vorhanden sein, welche Bilddaten B' der (realen) Maschine 6 erfasst. Alternativ oder zusätzlich können gemäß FIG 1 mittels Lagesensoren 12 die Position und/oder die Orientierung des motorisch verfahrbaren Elements 8 erfasst werden. In diesem Fall werden entsprechende Lagesignale p von den Lagesensoren 12 - gegebenenfalls indirekt über eine in FIG 1 nicht dargestellte Steuereinrichtung der Maschine 6 - an den Rechner 1 übermittelt. Auch derartige Lagesignale p können den Zustand der Maschine 6 hinreichend beschreiben.

Es ist möglich, dass das an den Bediener 7 ausgegebene dreidimensionale Bild B der Maschine 6 unter Umgehung des Rechners 1 generiert wird. Es ist jedoch ebenso möglich, dass der Rechner 1 das an den Bediener 7 ausgegeben dreidimensionale Bild B generiert. Beide Möglichkeiten sind in FIG 1 eingezeichnet. Wenn der Rechner 1 das dreidimensionale Bild B generiert, kann der Rechner 1 das dem Zustand der Maschine 6 entsprechende dreidimensionale Bild B beispielsweise anhand der ihm zugeführten Lagesignale p generieren.

Alternativ zum Ansteuern einer realen Maschine 6 ist es gemäß FIG 2 möglich, dass der Rechner 1 ein Modell 6' implementiert, das die (reale) Maschine 6 mit hinreichender Genauigkeit beschreibt. Das Modell 6' kann beispielsweise auf mathematisch-physikalischen Gleichungen beruhen, als neuronales Netz ausgebildet sein oder empirischer Natur sein. In diesem Fall umfassen die von dem Rechner 1 ergriffenen Maßnahmen zum Nachführen des Zustands der Maschine 6 gemäß FIG 5 das Aktualisieren des Modells 6'.

Es kann sein, dass das Modell 6' derart ausgebildet ist, dass der Rechner 1 - analog zur Ansteuerung der realen Maschine 6 - die Steuerbefehle S generiert und das Modell 6' den neuen Zustand anhand der Steuerbefehle S ermittelt. In diesem Fall ermittelt der Rechner 1 die Steuerbefehle S somit unabhängig davon, ob die Steuerbefehle S gemäß FIG 1 an die reale Maschine 6 oder gemäß FIG 2 an das Modell 6' ausgegeben werden. Das Generieren der Steuerbefehle S ist auch im Falle der Ausgestaltung gemäß FIG 2 möglich und sogar bevorzugt. Im Rahmen der Ausgestaltung gemäß FIG 2 sind jedoch auch andere Vorgehensweisen denkbar.

Weiterhin generiert der Rechner 1 im Falle der Ausgestaltung gemäß FIG 2 anhand des Modells 6' - genauer: anhand des Zustands des Modells 6'- das an den Bediener 7 auszugebende dreidimensionale Bild B der Maschine 6. Ein entsprechender Zustand Z des Modells 6' wird dem Rechner 1 zu diesem Zweck zugeführt.

In den Fällen, in denen der Rechner 1 selbst das dreidimensionale Bild B der Maschine 6 generiert, kann der Rechner 1 über die Berücksichtigung von Abbildungsparametern P Einfluss auf das dreidimensionale Bild B nehmen. Er kann insbesondere einen Skalierungsfaktor, den Ort und die Orientierung des Bildes B im Raum einstellen. Auch kann er - je nach Lage des Einzelfalls - Ein- oder Ausblendungen vornehmen. Eine Einblendung kann beispielsweise sinnvoll sein, um einen zulässigen Bereich oder einen verbotenen Bereich zu markieren. Ausblendungen können beispielsweise sinnvoll sein, um verdeckte Elemente sichtbar zu machen.

Die oben genannten Abbildungsparameter P, die der Rechner 1 in einem Schritt S11 bei der Generierung des dreidimensionalen Bildes B berücksichtigt, können dem Rechner 1 fest vorgegeben sein. Alternativ ist es gemäß FIG 6 möglich, dass der Rechner 1 in einem Schritt S12 von dem Bediener 7 der Maschine 6 mindestens einen Abbildungsparameter P entgegen nimmt. Wie bereits erwähnt, generiert der Rechner 1 in der Regel die Steuerbefehle S für die Maschine 6, wobei die Steuerbefehle S mit dem Nachführen des Zustands der Maschine 6 korrespondieren. Vorzugsweise hinterlegt der Rechner 1 die Steuerbefehle S gemäß FIG 3 in einem Schritt S16 in einem Speicher 13 (siehe FIG 1 und 2). Dadurch ist es möglich, dass die Maschine 6 wiederholt entsprechend den in dem Speicher 13 hinterlegten Steuerbefehlen S angesteuert wird. Beispielsweise kann die Hinterlegung als eigenständige Steuerdatei oder als Teil einer derartigen Datei erfolgen.

Die vorliegende Erfindung weist viele Vorteile auf. Insbesondere ist auf komfortable Weise eine Maschinenbedienung - sei es real, sei es virtuell - möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für einen Rechner (1),
- wobei dem Rechner (1) bekannt ist, welches einem Zustand einer Maschine(6), die mindestens ein motorisch verfahrbares Element (8) aufweist, entsprechende dreidimensionale Bild (B) der Maschine (6) über eine Anzeigeeinrichtung (5) an einen Bediener (7) der Maschine (6) ausgegeben wird,
- wobei dem Rechner (1) mittels einer Erfassungseinrichtung (9) erfasste Greifbewegungen, Loslassbewegungen und Lageveränderungen einer Hand (10) des Bedieners (7) zugeführt werden,
- wobei die Greifbewegungen, die Loslassbewegungen und die Lageveränderungen der Hand (10) des Bedieners (7) von dem Rechner (1) bezüglich des dreidimensionalen Bildes (B) der Maschine (6) registriert werden,
- wobei in dem Fall, dass der Bediener (7) mit seiner Hand (10) in Bezug auf das dreidimensionale Bild (B) das motorisch verfahrbare Element (8) greift und sodann die Lage seiner Hand (10) verändert, von dem Rechner (1) Maßnahmen ergriffen werden, aufgrund derer der Zustand der Maschine (6) entsprechend der Lageveränderung der Hand (10) des Bedieners (7) nachgeführt wird, bis der Bediener (7) in Bezug auf das dreidimensionale Bild (B) das motorisch verfahrbare Element (8) loslässt.

2. Betriebsverfahren nach Anspruch 1,
**dadurch gekennzeichnet, dass** die von dem Rechner (1) ergriffenen Maßnahmen zum Nachführen des Zustands der Maschine (6) das Ausgeben von Steuerbefehlen (S) an die Maschine (6) umfassen und dass dem Rechner (1) den Zustand der Maschine (6) beschreibende Daten (B', p) zugeführt werden.

3. Betriebsverfahren nach Anspruch 2,
**dadurch gekennzeichnet, dass** die den Zustand der Maschine (6) beschreibenden Daten (B', p) mittels mindestens einer Kamera (11) erfasste Bilddaten (B') der Maschine umfassen.

4. Betriebsverfahren nach Anspruch 2,
**dadurch gekennzeichnet, dass** die den Zustand der Maschine (6) beschreibenden Daten (B', p) von Lagesensoren (12) der Maschine (6) ausgegebene Lagesignale (p) umfassen und dass das dem Zustand der Maschine (6) entsprechende dreidimensionale Bild (B) der Maschine (6) von dem Rechner (1) anhand der Lagesignale (P) generiert wird.

5. Betriebsverfahren nach Anspruch 1,
**dadurch gekennzeichnet, dass** der Rechner (1) ein Modell (6') der Maschine (6) implementiert, dass die von dem Rechner (1) ergriffenen Maßnahmen zum Nachführen des Zustands der Maschine (6) das Aktualisieren des Modells (6') umfassen und dass das dem Zustand der Maschine (6) entsprechende dreidimensionale Bild (B) der Maschine (6) von dem Rechner (1) anhand des Modells (6') generiert wird.

6. Betriebsverfahren nach Anspruch 4 oder 5,
**dadurch gekennzeichnet, dass** der Rechner (1) von dem Bediener (7) der Maschine (6) mindestens einen Abbildungsparameter (P) entgegen nimmt und dass der Rechner (1) das von ihm zu generierende dreidimensionale Bild (B) der Maschine (6) entsprechend dem Abbildungsparameter (P) generiert.

7. Betriebsverfahren nach einem der obigen Ansprüche,
**dadurch gekennzeichnet, dass** der Rechner (1) mit dem Nachführen des Zustands der Maschine (6) korrespondierende Steuerbefehle (S) generiert und in einem Speicher (13) hinterlegt, so dass die Maschine (6) wiederholt entsprechend den in dem Speicher (13) hinterlegten Steuerbefehlen (S) ansteuerbar ist.

8. Computerprogramm, das Maschinencode (4) umfasst, der von einem Rechner (1) unmittelbar abarbeitbar ist und dessen Abarbeitung durch den Rechner (1) bewirkt, dass der Rechner (1) ein Betriebsverfahren mit allen Schritten eines Betriebsverfahrens nach einem der obigen Ansprüche ausführt.
